# EUROPEAN PATENT SPECIFICATION

(11) **EP 2 131 438 B1**
(45) Date of publication and mention of the grant of the patent: **07.03.2012**
(21) Application number: 09251106.2
(22) Date of filing: 16.04.2009
(51) Int. Cl.: H01M 8/24

(54) **Fuel cell module support**
Kraftstoffzellenmodulunterstützung
Support de module de pile à combustible

(30) Priority: 23.04.2008 GB 0807412
(43) Date of publication of application: 09.12.2009
(73) Proprietor: Ceres Intellectual Property Company Limited, Sussex RH13 5PX (GB)
(72) Inventor: Barnard, Paul, Crawley, West Sussex RH10 1SS (GB); Harrington, Matthew, Crawley, West Sussex RH10 1SS (GB); Dawson, Richard, Crawley, West Sussex RH10 1SS (GB); Sharp, Chad, Crawley, West Sussex RH10 1SS (GB)
(74) Representative: Robertson, James Alexander

(56) References cited:
- WO-A-2006/083018
- WO-A-2007/021280
- US-A1- 2006 113 131

## Description

The present invention is concerned with support systems and support structures for fuel cell modules and methods of assembling fuel cell systems.

The present invention is particularly concerned with fuel cell systems such as domestic combined heat and power (CHP) systems, more particularly micro CHP (mCHP) systems and their convenient assembly, particularly for wall-mounted systems. Other applications include standalone power generation systems connected to bottled gas and floor-standing power generation systems including uninterruptible power supply systems.

Fuel cells, fuel cell stack assemblies, fuel cell stack system assemblies and the like are well known in the prior art and relevant teachings include the likes of WO 02/35628, WO 03/075382, WO 2004/089848, WO 2005/078843, WO 2006/079800, WO 2006/106334, WO 2007/085863, WO 2007/110587, WO 2008/001119, WO 2008/003976, WO 2008/015461, WO 2008/053213, WO 2008/104760 and WO 2008/132493, all of which are herein incorporated by reference in their entirety.

WO 2006/083018 discloses installation structures for fuel cell stacks, methods of transporting fuel cell stacks, and methods of mounting fuel cell stacks on a vehicle.

Fuel cell system assemblies can be complex and of substantial mass. When providing a commercial product which is to be installed at a customer site, it is important that any such installation can be achieved simply and conveniently. For example, it can be important to ensure that the fuel cell system component parts such as electrical, fuel, water, exhaust gas and heating connectors can be conveniently connected on-site with the necessary parts and services e.g. electrical circuits, fuel supply, water supply or drainage, exhaust gas conduits, and hot water systems. Similarly, it is important for small scale (e.g. domestic or small business applications) that when a fuel cell system assembly is to be lifted into place it can be done without requiring the use of mechanical lifting aids or devices.

The present invention seeks to provide a fuel cell module support system allowing for simple and convenient installation and assembly. In particular the present invention seeks to provide a fuel cell module support system which allows for convenient assembly, which ensures that component parts are correctly located within an assembly, and which reduces the mass of individual component parts which must be lifted during assembly of the fuel cell system. The present invention also seeks to make the areas of the fuel cell module support system surrounding a fuel cell module more conveniently accessible, particularly for maintenance and assembly. The present invention also seeks to simplify and ease installation of fuel cell module support system in locations with limited accessibility. The present invention also seeks to reduce conductive heat transfer between component parts of the fuel cell module support system.

According to the present invention there is provided a fuel cell module support comprising a frame, an at least one bracket attached to said frame, and at least one suspension device, configured such that in-use a fuel cell module can depend from said at least one suspension device depending from said at least one bracket.

Also provided according to the present invention is a fuel cell module support and fuel cell module assembly, comprising a frame, an at least one bracket attached to said frame, at least one suspension device depending from said at least one bracket, and a fuel cell module depending from said at least one suspension device.

In use the at least one suspension device is in tension.

Having the at least one suspension device in tension eliminates shear loads which would otherwise be present in fuel cell modules mounted using horizontal pins connected to a fuel cell module mounting device. This is particularly so in view of the operational temperatures - shear loads will have a severe effect at operational temperatures of e.g. 500DegC whilst at the same temperature a tension load will not have an adverse effect.

In certain embodiments the frame comprises a back plate. In certain embodiments the frame is a generally planar arranged plate or a punched formed sheet. Other frame designs include the use of an extruded form or forms onto which sheets and/or other parts are welded or otherwise attached to form the frame. Other frame designs include a tubular arrangement.

Preferably, the bracket is a component part of the frame. For example, with frames comprising a tubular arrangement, the bracket is preferably defined as part of the tubular arrangement.

As will be appreciated by a person of ordinary skill in the art, the frame can be provided with strengthening features, for example by way of stamped or folded features, or the provision of an at least one brace and/or stay.

Preferably in-use the frame is mounted on a wall or other similar generally vertical surface.

Preferably the fuel cell module support or assembly additionally comprises mounting means for in-use mounting said frame on a wall.

Preferably, the frame has attached to it at least one of: a fuel gas valve and pump assembly, a desulphurisation unit, an exhaust connection assembly, a deioniser, a water store and water pump, a fuel cell module air blower, an auxiliary hot water burner unit, an auxiliary hot water burner unit air blower, control electronics, power electronics, central heating and hot water storage water pumps, and condenser heat exchangers.

Preferably the fuel cell system has a total mass of 30-120kg. Preferably the fuel cell module has a mass of 10-60kg.

Thus in an assembly/installation process, the frame can be moved into position (e.g. mounted on a wall) and this does not require the fuel cell module to be moved as part of the frame, thus reducing the total mass which has to be moved and making assembly/installation simpler and more convenient.

The fuel cell module preferably comprises at least one fuel cell stack assembly.

The term "fuel cell stack assembly" as used herein means an at least one fuel cell stack, each at least one fuel cell stack comprising at least one fuel cell stack layer, each at least one fuel cell stack layer comprising at least one fuel cell, fuel and oxidant inlet/outlet connections, and flow paths for fuel and oxidant stream or streams, and for used fuel and oxidant stream or streams, and a fuel cell stack base plate. Other optional components of a fuel cell stack assembly include a hood sealingly attached to the fuel cell stack base plate, a fuel side seal assembly, oxidant side seal assembly, end-plates and a compression system, fuel cell stack insulation, and electrical and control/monitoring connections as appropriate.

Preferably the fuel cell module additionally comprises at least one of: a tail gas burner, an air pre-heater, and a fuel processor unit.

Preferably the fuel cell module additionally comprises insulation.

The fuel processor unit comprises a catalytic reformer and a steam generator. The fuel cell processor optionally additionally comprises at least one of: a reformate cooler heat exchanger, and a steam fuel mixer.

Preferably, the catalytic reformer is a heat exchanger device with a steam reformer catalyst on one side of the heat exchanger and the tail gas burner off-gas stream on the other side of the heat exchanger. The steam reformer catalyst catalyses an endothermic reaction and gains its heat from the hot tail gas burner off-gas stream passing on the other side of the heat exchanger.

Preferably the fuel cell module additionally comprises insulation, more preferably a microporous insulation material. A preferred insulation is Promalight (RTM) (Promat, UK).

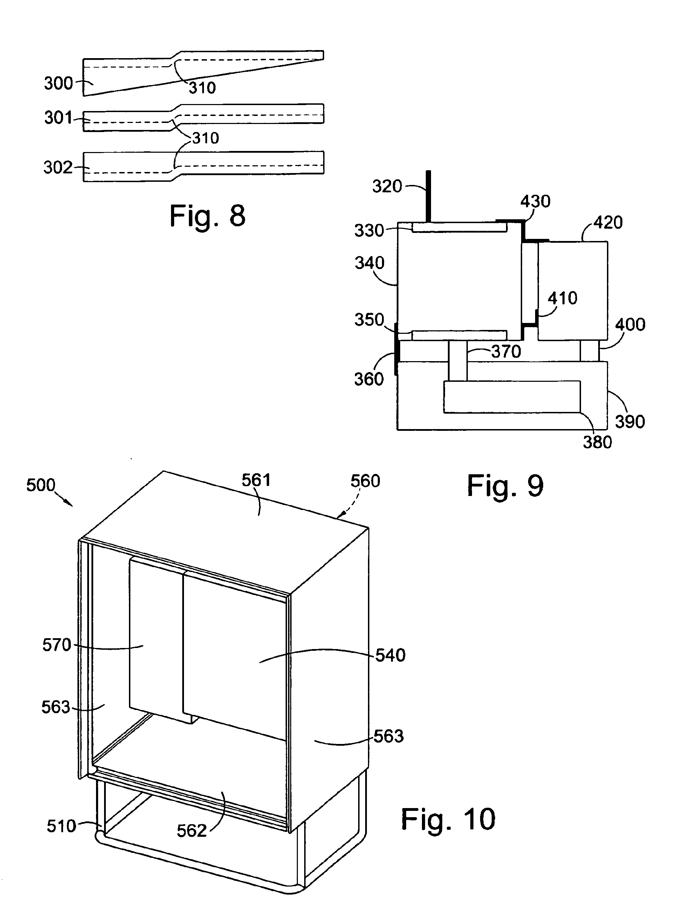

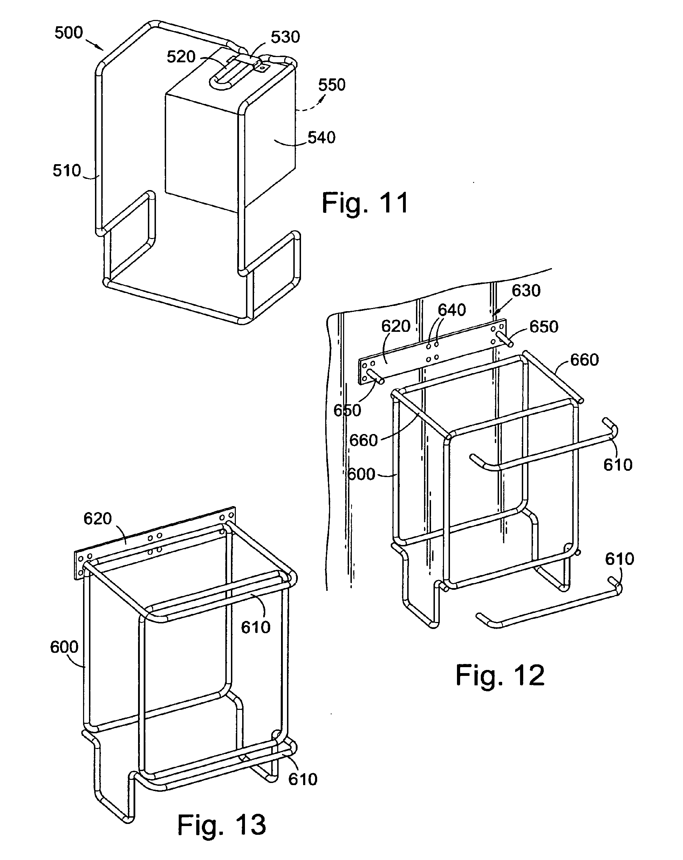

It is not uncommon in the field for the fuel cell stack to be insulated and mounted within a frame and for the frame to rest on a plate or another frame within the product. There is then an additional requirement to use positive location features to help secure the fuel cell stack within the product - such as a retaining strap. This process requires the fuel cell stack to be mounted on a relatively flat surface, restricting access to the underside of the fuel cell stack and also meaning that the insulation around the fuel cell stack needs to be able to support the loads imposed on it by the weight of the fuel cell stack without compromising the thermal insulation of the fuel cell stack over the envisaged life time and operating environment of the fuel cell stack. This leads to significant additional strengthened insulation material being placed under the fuel cell stack unit. The flat surface that the fuel cell stack rests on needs to be designed to take the weight of the fuel cell stack, which can be considerable, thus increasing the design complexity and cost of the plate or frame. Once the fuel cell stack has been mounted, there is then a requirement to mount the other devices within the product, resulting in several mounting systems being employed, or a more extensive supporting plate or frame being used. An example showing this is US7279246 which shows (Figure 8) a substantial frame required to support the SOFC stacks and reformer arrangement, and (Figure 11) an additional frame being required to support the whole unit.

Preferably the fuel cell module depends from the at least one suspension device by way of engagement means. In some forms of fuel cell stack assemblies, the fuel cells are arranged extending generally horizontally and stacked vertically one on top of another. In some embodiments the base plate is located at the bottom of a stack of fuel cells. In other embodiments, the base plate is located at the top of a stack of fuel cells. Preferably, the at least one suspension device engages a fuel cell stack end-plate or base plate. Preferably, such an end-plate or base plate is located at the top of a stack of fuel cells (i.e. the end-plate or base plate which depends from the at least one suspension device is that which is most proximal the bracket, more particularly proximal the part of the bracket from which the at least one suspension device depends.

By connecting the at least one suspension device to a fuel cell stack end-plate or base plate, excellent mechanical support is provided for the rest of the fuel cell module - the end-plate or base plate is typically mechanically very substantial as it is used to support the fuel cell stack and also to provide compressive force for the fuel cell stack layers. By suspending the base plate or end-plate from the suspension means, it also allows piping and cabling to extend from the bottom of the fuel cell stack which is a typically convenient arrangement since services and piping in many situations (for example in a home, office or other building environment) will extend from the ground upwards towards the fuel cell system or from the roof downwards and then up to the bottom connection points on the boiler or CHP device. Thus all installation wet connections are generally at the bottom of the boiler of CHP device. By allowing piping and cabling to extend from the bottom of the fuel cell stack, the amount of piping and cabling required by the device and the overall mass, cost and operating cost resulting from the thermal mass of the device can be reduced since there is no need for them to extend from other parts of the fuel cell stack and to then be routed such that they can extend from the bottom or sides of the fuel cell module to conveniently connect to the fuel cell system.

This also provides for reduced heat transfer between the fuel cell module and the rest of the fuel cell system when compared to existing arrangements since the primary conductive transfer of heat will occur through the at least one suspension device instead of e.g. through an extended plate or other type of arrangement on which a fuel cell stack assembly sits.

In certain embodiments, the at least one suspension device is threaded and the end-plate or base plate which it engages is threaded (i.e. defines a threaded orifice) such that the suspension device can be screwed into the end-plate or base plate. In other embodiments, the end-plate or base plate comprises a lug with which the at least one suspension device connects, engages or mates such that the fuel cell module depends from (i.e. is suspended from) the at least one suspension device. Thus, for example the suspension device could have a hook or T-bar which engages, connects or mates with a feature in an end-plate or base plate. Other suitable embodiments will be readily apparent to one skilled in the art.

Preferably the at least one bracket is adapted to allow the at least one suspension device to be slid into position on the at least one bracket. Preferably, the at least one bracket comprises at least one arm along which in-use the at least one suspension device can be slid. Thus the arm can extend from the frame to allow convenient location of the fuel cell module onto the bracket arm, and the fuel cell module can then be slid into place.

A wide range of suitable forms for the at least one bracket will be readily apparent to one skilled into the art. For example, the at least one bracket may be provided in the form of two brackets each presenting an L-shaped cross-section to the at least one suspension device, each "L" facing outwards. In other embodiments two brackets may be provided, each bracket taking the form of two "L" shapes facing inwards towards one another to define two channels or slots along which the at least one suspension device can be slid. In other embodiments the at least one bracket has a slotted "U" shape. Other examples include general slider arrangements as are widely used for drawers.

Preferably, the at least one bracket comprises a positive location feature adapted to in-use mate with, engage or retain the at least one suspension device. Thus for example the positive location feature may take the form of a depression, notch or step-down which the at least one suspension device can drop into.

By providing a positive location feature, the need to bolt or weld or physically fix or join the fuel cell module to the frame can be removed, further aiding convenient assembly.

Other means for mounting the frame bracket will be readily apparent to one skilled in the art, and for example include traditional wall bracket designs such as those including mounting hooks onto which the frame is located.

Preferably the at least one suspension device comprises a head portion which in-use interacts with said at least one bracket, a neck portion defining first and second ends and extending at said first end from said head portion, and a foot portion located at the second end (i.e. the opposite end of the neck portion from the head portion) and which in-use interacts with the fuel cell module such that the fuel cell module depends from it.

Preferably the head portion is adapted to aid its in-use sliding along the at least one bracket. In certain embodiments the head portion is provided with lubricant on the surface which will in-use contact the at least one bracket. In other embodiments, the surface which will in-use contact the at least one bracket is provided with a low-friction coating. In other embodiments the head portion is provided with wheels or bearings to enable it to be conveniently slid into position.

The suspension device neck portion is preferably in the form of a pin, rod, bar or wire. In certain embodiments, the suspension device neck portion is described as a "shank".

Suspension devices can, of course, incorporate vibration isolation or damping features, and such features will be readily apparent to a person of ordinary skill in the art.

Preferably, the suspension device comprises a cap (the head portion) from which extends a threaded bar (the neck and foot portions). Thus the suspension device can be engaged with the fuel cell module by screwing the threaded portion into a threaded orifice in a fuel cell stack end-plate, and the fuel cell module and suspension device can then be slid or moved into place along the at least one bracket.

Preferably, the suspension device (as illustrated in the specific embodiments below as "suspension device 530") is attached to the fuel cell module. Preferably this is done prior to the suspension device and fuel cell module being arranged to depend from the at least one bracket.

In other embodiments, the at least one suspension device comprises an extended head portion comprising an elongate bar from which extends at each end a neck portion, each neck portion having a foot portion at the end opposite the head portion.

In certain embodiments, the at least one suspension device is not located above the centre of gravity of the fuel cell module and thus in-use a moment is created about the point(s) at which the at least one suspension device are connected with the fuel cell module. This moment can help keep the fuel cell module positioned. In certain embodiments, the moment is reacted between the fuel cell module and the frame (for example a back plate) through insulation in the fuel cell module contacting the frame. This thus avoids the requirement for a securing means such as a strap.

In other embodiments, the at least one suspension device is located above the centre of gravity of the fuel cell module, and the fuel cell module support and assembly additionally comprises an at least one torque rod connected between the fuel cell module and the frame such that in-use the vertically induced loads are taken by the at least one suspension device and any reactive loads are taken by the at least one torque rod. This type of assembly can be particularly useful in providing vibration isolation for the fuel cell module, and this is of particular relevance to the component parts ("support systems") of the fuel cell module. This is particularly useful in automotive applications or similar such applications where there are varying dynamic loads imparted to the fuel cell system resulting from the operating environment.

Preferably the at least one fuel cell stack assembly is a solid oxide fuel cell stack assembly. More preferably, it is an intermediate-temperature solid oxide fuel cell stack assembly. More preferably, it is a metal-supported intermediate-temperature solid oxide fuel cell stack assembly.

Also provided according to the present invention is a fuel cell module support or assembly according to the present invention, mounted on a wall. Preferably it does not contact a floor. More preferably, it does not rest upon a floor.

Also provided according to the present invention is a method of assembling a fuel cell system, comprising the steps of:
(i) providing a frame having at least one bracket attached thereto;
(ii) providing a fuel cell module and an at least one suspension device; and
(iii) suspending said at least one suspension device and said fuel cell module from said at least one bracket.

Preferably the method also comprises prior to step (iii) the step of mounting the frame upon a wall. Preferably, the frame and fuel cell module do not contact a floor. More preferably, they do not rest upon a floor.

Preferably the method also comprises the step of connecting the frame components to services in or from the location where the assembly is taking place. Preferably the services comprise at least one of: water, fuel, electricity, heating (both hot water and central heating as appropriate), air feed and exhaust gases. Preferably this step is performed prior to step (iii).

Preferably the method also comprises the step of connecting the fuel cell module to the frame. In particular, this preferably comprises connecting water, fuel, electricity, heating, air, exhaust gas and control electronics connections (where provided) of the fuel cell module to the corresponding connections or components of the frame.

Regarding materials for use in the present invention, the at least one suspension device is subject to tensile loading and also to heat where the suspension device connects to the fuel cell end plate. The temperature range that the suspension device is exposed to can be from -20DegC to 600DegC, more typically in the 10-500DegC range.

With relatively low tensile loading imposed by the fuel cell module (∼10PMa load seen by the suspension device assuming the device is 2 x 4mm pins supporting a 25kg fuel cell module; ∼15Nm moment seen by the frame assuming 65mm moment arm) the material selection for both suspension devices is straightforward with stainless steels for the suspension devices, for example 300 series stainless such as 302 or 310 or 316 grade.

The at least one bracket can be made from ordinary mild steel for the main frame and a corrosion resistant contact area for the area where the at least one suspension device touches the frame. The corrosion resistance may be required due to the at least one suspension device being at a higher temperature (up to 500DegC). Such corrosion resistant steels could be 300 series steels, or galvanised steel or the like. The frame can made from extruded section, or be fabricated using stamping, welding or folded sheet, or it can be cast form.

The fuel cell stack end plate sees a higher loading due to the requirement to handle the stack compression loads at operating temperature, and is typically made from a 400 series steel, for instance 3Cr12.

Where tabs are used (below), they can be made from e.g. 300 series stainless steel and are simple tabs or folded sections or stubs spot welded or screwed onto one device and then either located onto a location feature on the other device or spot welded to a tab or directly to the other device.

The insulation material can be made from any suitable insulation capable of insulating up to 600 DegC that and that effectively can package the fuel cell module. Examples include Promalight (RTM) (Promat GmbH, Germany).

The invention will be further apparent from the following description which shows by way of example only forms of fuel cell module supports, fuel cell module support and fuel cell module assemblies, and methods of assembly of a fuel cell system.

Of the figures:
- Figure 1: shows a cross-section through a fuel cell module support and fuel cell module assembly;
- Figure 2: shows a view of first arrangements of brackets, suspension device and fuel cell module;
- Figure 3: shows a view of a second arrangement of brackets, suspension device and fuel cell module;
- Figure 4: shows a perspective view of a frame back plate and brackets;
- Figure 5: shows a close-up view of a suspension device;
- Figure 6: shows a partial perspective cut-away view of brackets, suspension devices and fuel cell stack end-plate;
- Figure 7: shows a partial perspective cut-away view of brackets, suspension devices and fuel cell stack end-plate;
- Figure 8: shows side views of bracket arms; and
- Figure 9: shows a fuel cell module.
- Figure 10: shows a perspective view of a fuel cell module support and fuel cell module assembly together with sides mounted on the frame, the support comprising a tubular frame arrangement;
- Figure 11: shows a perspective view of a fuel cell module support and fuel cell module assembly, the support comprising a tubular frame arrangement incorporating the bracket as a component part of the frame from which depends the suspension device which in turn has the fuel cell module depending from it;
- Figure 12: shows a partially exploded perspective view of an alternative tubular frame design for a fuel cell module support; and
- Figure 13: shows the fuel cell module support of Figure 12 mounted on a wall bracket.

As can be seen from the figures, a frame 10 is provided comprising a back plate 20 which is mounted on wall 30. Extending outwards from frame 10 are brackets 40.

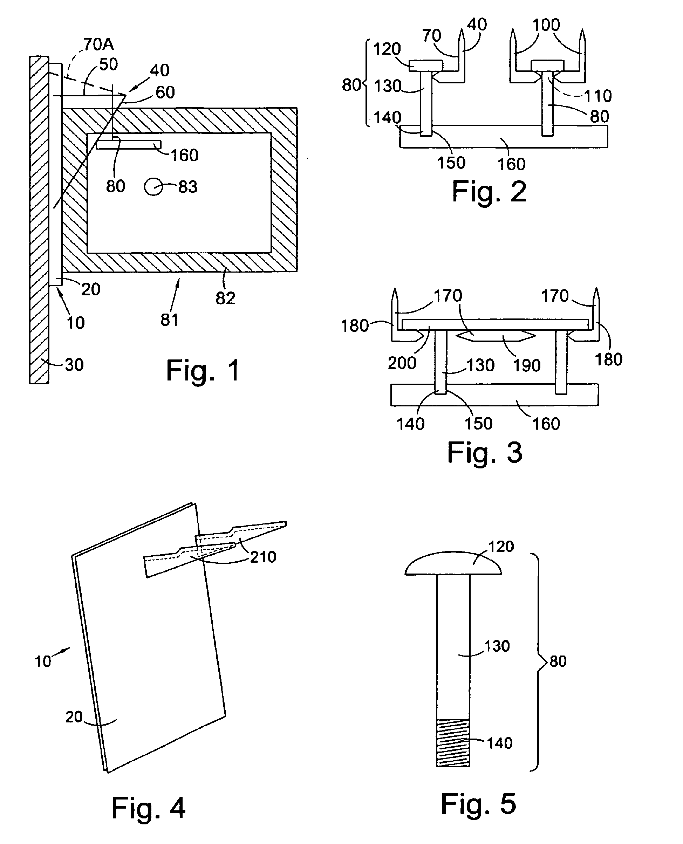

In a first embodiment, each bracket 40 comprises an arm member 50 and a support member 60. As can be seen from Figure 1, a first embodiment is shown with arm member 50 and support member 60 shown as solid lines. In a second embodiment, bracket 40 comprises arm member 50 (solid line) and support member 70A (dashed line).

As can be seen from Figure 1, suspension device 80 depends from bracket 40 and is engaged with fuel cell stack end-plate 160 from which the rest of fuel cell module 81 depends. Fuel cell module 81 also includes an outer layer of Promalight (RTM) insulation 82. Fuel cell module 81 also comprises (not shown) a tail gas burner, an air pre-heater, and a fuel processor unit.

The centre of gravity 83 of fuel cell module 81 is located outwards from the points at which suspension device engages fuel cell stack end-plate 60. Thus, moment is created about those points. This moment helps keep fuel cell module 81 positioned against back plate 20, the moment being reacted between fuel cell module 81 and back plate 20 through insulation 82.

As can be seen from Figure 2 (left side) in one arrangement a bracket 70 has an L-shaped cross-section from which suspension device 80 depends. Bracket 70 faces outwards, and a corresponding second bracket (not shown) from which suspension device 80 can depend has a cross-section which is a mirror image of that of bracket 70 such that it also faces outwards.

As can be seen from Figure 2 (right side) in another arrangement bracket 100 has a cross-section of two opposing L-shapes which ensures that suspension device 90 is retained within slot 110 defined between them.

Suspension devices 80 comprise a head portion in the form of a cap 120, a shank 130 and a threaded foot portion 140 which engages with a threaded orifice 150 in fuel cell stack end-plate 160.

Figure 3 shows an alternative arrangement in which bracket 170 has a cross-section with first and second opposing L-shaped portions 180 and a central bar 190. In this case only a single suspension device 200 is provided, comprising first and second necks 130 each terminating at a distal end in a threaded foot portion 140 which engages with a threaded orifice 150 in fuel cell stack end-plate 160.

Figure 4 shows a perspective view of a frame 10 comprising a back plate 20 and a pair of brackets 210.

Figure 5 shows a close-up view of suspension device 80.

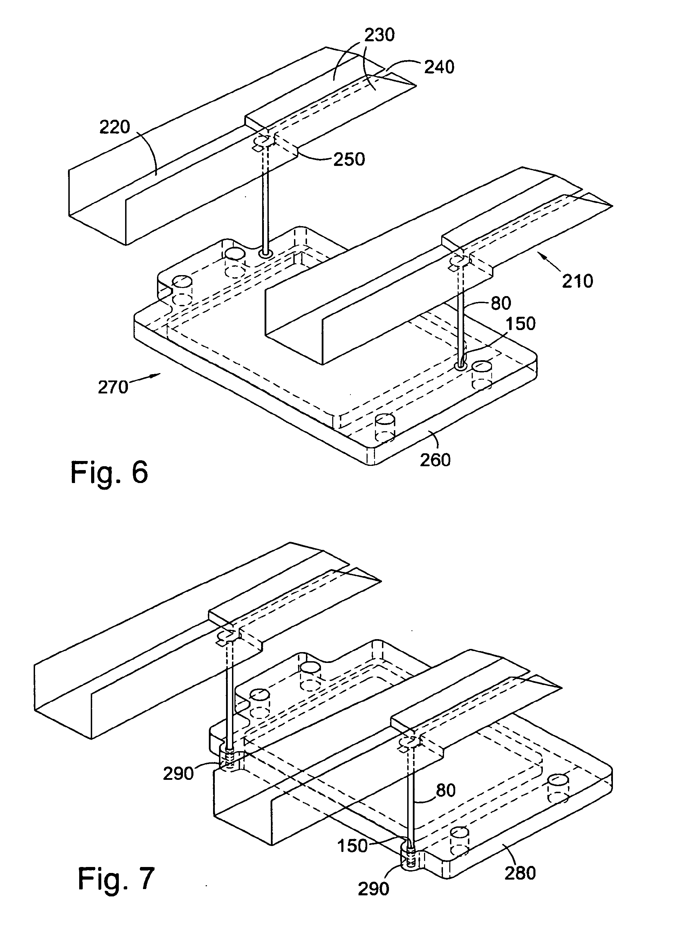

As can be seen from Figure 6, brackets 210 are shaped to define arm 220 and fingers 230 defining between them slot 240. Angled portion 250 is shaped such that fingers 230 are lifted above arm 220 and acts as a positive location feature for suspension device 80 since in-use suspension device 80 can be conveniently slid along slot 240 from the tips of fingers 230 towards arm 220. Suspension device 80 drops down angled portion 250 and is held in place as a result of neck 130 abutting the end of slot 240 and cap 120 abutting the bottom of angled portion 250.

Threaded foot portion 140 threadedly engages threaded orifices 150 defined by fuel cell stack end-plate 260. In this embodiment suspension devices 80 are located over the centre of gravity of the fuel cell module 270 (only partially shown) and a torque rod (not shown) is also provided connected between fuel cell module 270 and frame 10 such that in-use the vertically induced loads are taken by suspension devices 80 and any reactive loads are taken by the torque rod.

Figure 7 shows an alternative embodiment in which fuel cell stack end-plate 280 additionally comprises lugs 290 which define threaded orifices 150 which are engaged by threaded foot portions 140 of suspension devices 80.

In this embodiment the suspension devices 80 are not located over the centre of gravity of the fuel cell module and thus creates a moment reaction effect to force the fuel cell module against the frame - such as indicated in Figure 1.

Figure 8 shows side views of various bracket arms 300-302. The dashed lines indicate the surface within the brackets along which suspension devices in-use can be slid, and each bracket arm 300-302 has an angled portion 310 which in-use acts as a positive location feature for a suspension device.

Figure 9 shows a fuel cell module including its various component parts. The mass of the fuel cell module is supported through the fuel cell stack end plate 330. The suspension device 320 is attached to the fuel cell stack end plate 330.

Vertical compression of the fuel cell stack is achieved using tie bars (not shown) spanning from the fuel cell stack base plate 350 to the fuel cell stack end plate 330 enables structural support of components from either end of the stack.

The air pre heater 420 mass is supported with a tab 430 between the top of the fuel cell stack and the top of the air pre heater 420. This tab can be welded between the two components.

Support of the air pre heater 420 from the top of the fuel cell stack will cause a moment due to the support not being directly above the air pre heater 420 centre of mass. This moment is reacted with a tab 410 between the air pre heater 420 and the side of the fuel cell stack towards the bottom. This tab 410 is not rigidly fixed to the fuel cell stack to enable movement during thermal cycling of the Fuel Cell Module, thus reducing the stresses in the other fixing points.

The Fuel Processing Unit 390 is supported from the Air Pre Heater 420 using a structural pipe 400 at one end and a vertical tab 360 to the bottom of the stack 340 at the other end. The tab 360 can be connected to the stack base plate 350. The tab 360 could be a two-piece tab with a welded joint made between the two components.

The Tail Gas Burner 380 is supported from the stack base plate 350 using a structural pipe 370.

Figure 10 shows a further embodiment in which a fuel cell module support 500 is provided comprising tubular steel frame 510. As can be seen from Figure 12, frame 510 defines bracket 520, i.e. bracket 520 is a component part of frame 510. Suspension device 530 depends from bracket 520 and in turn fuel cell module 540 depends from suspension device 530, and fuel cell module 540 and suspension device 530 are arranged such that when suspended from bracket 520 moment is created as indicated by arrow 550. This moment is reacted between fuel cell module 540 and back plate 560, reducing the requirement for additional securing means for fuel cell module 540.

Installation of fuel cell module support 500 and fuel cell module 540 assembly is performed as follows:

### During unit assembly:

1. Back plate 560 is installed onto tubular steel frame 510 by way of standard snap-fit fittings (not shown),
2. Body parts comprising top, bottom and side walls 561, 562 and 563 and then slid/snapped into place and secured as appropriate, and a front (not shown) is put in place
3. Other system components including main boiler/burner and heat exchanger arrangement 570 are then mounted on tubular steel frame 510 and on the back plate or other body parts
4. The pre-assembled unit is tested and packaged ready for shipment and installation

### During installation:

1. Wall bracket (620) is placed on a wall (not shown) onto which the assembly is to be mounted.
2. Back plate 560 is installed onto tubular steel frame 510 by way of standard snap-fit fittings (not shown).
3. The pre-assembled unit is then mounted on wall bracket 620.
4. Suspension device 530 with fuel cell module 540 is then positioned on bracket 520.
5. Fuel, electrical and exhaust connections are then made.
6. Installation commissioning is then undertaken
7 A front cover is then attached to the front of the unit

Figures 11 and 12 show an alternative embodiment in which a tubular steel frame 600 is provided, incorporating detachable mounting bars 610. In use, assembly proceeds as for the previous embodiment, and frame 600 is mounted on wall bracket 620 which is mounted on wall 630 by way of wall mountings 640. Arms 650 extend from mounting means 620 away from wall 630 and are dimensioned such that they can be slid into tubes 660 of frame 600 and engage with a friction fit.

In other embodiments (not shown) a positive location feature is provided, for example in the form of a latch member or members on arms 650 and holes defined in tubes 660 such that in-use the latch members are compressed as arms 650 are slid into tubes 660 and then expand out of tube 660 through the holes defined therein such that further movement of arm 650 in tube 660 is prevented.

Detachable mounting bars 610 allow for convenient lifting and movement of frame 600, and once frame 600 has been successfully mounted on mounting means 620 (Figure 14) they are removed.

Assembly then continues as per the previous embodiment.

It will be appreciated that it is not intended to limit the present invention to the above examples only, other embodiments being readily apparent to a person of ordinary skill in the art without departing from the scope of the appended claims.

### Reference numerals:

10 - frame
20 - back plate
30 - wall
40 - bracket
50 - arm member
60 - support member
70 - bracket with L-shaped cross-section
70A - support member
80 - suspension device
81 - fuel cell module
82 - insulation
83 - centre of gravity
100 - bracket
110 - slot
120 - cap
130 - shank
140 - threaded foot portion
150 - threaded orifice
160 - fuel cell stack end-plate
170 - bracket
180 - L-shaped portion
190 - central bar
200 - suspension device
210 - bracket
220 - arm
230 - fingers / runners
240 - slot
250 - angled portion
260 - fuel cell stack end-plate
270 - fuel cell module
280 - fuel cell stack end-plate
290 - lug
300 - bracket arm
301 - bracket arm
302 - bracket arm
310 - angled portion
320 - suspension device
330 - fuel cell stack end plate
340 - solid oxide fuel cell stack assembly
350 - fuel cell stack base plate
360 - welded tab
370 - structural pipe
380 - tail gas burner
390 - fuel processor
400 - structural pipe
410 - reacting tab
420 - air pre heater
430 - welded tab
500 - fuel cell module support
510 - tubular steel frame
520 - bracket
530 - suspension device
540 - fuel cell module
550 - indication of moment
560 - back plate
561 - top wall
562 - bottom wall
563 - side wall
570 - heat exchanger arrangement
600 - frame
610 - detachable mounting bars
620 - wall bracket
630 - wall
640 - wall mounting
650 - arm
660 - tube

## Claims

1. A fuel cell module support comprising a frame, an at least one bracket attached to said frame, and at least one suspension device depending from said at least one bracket, configured such that in-use a fuel cell module can depend from said at least one suspension device depending from said at least one bracket.

2. A fuel cell module support and fuel cell module assembly, comprising a fuel cell module support according to claim 1, and a fuel cell module depending from said at least one suspension device.

3. A fuel cell module support or assembly according to any of the preceding claims, said fuel cell module comprising an at least one fuel cell stack assembly.

4. A fuel cell module support or assembly according to claim 3, said fuel cell module additionally comprising at least one of: a tail gas burner, an air pre-heater, and a fuel processor unit.

5. A fuel cell module support or assembly according to any of the preceding claims, said at least one bracket being adapted to allow said at least one suspension device to be slid into position on said at least one bracket.

6. A fuel cell module support or assembly according to any of the preceding claims, said at least one bracket being adapted to allow said at least one suspension device to be positioned on it.

7. A fuel cell module support or assembly according to claim 5 or 6, said at least one bracket comprising at least one arm along which in-use said at least one suspension device can be slid.

8. A fuel cell module support or assembly according to any of claims 5-7, said at least one bracket comprising a positive location feature adapted to in-use mate with or engage said at least one suspension device.

9. A fuel cell module assembly according to claim 2 or any of claims 3-8 when dependent upon claim 2, wherein the centre of gravity of the fuel cell module is not vertically underneath the at least one suspension device.

10. A fuel cell module assembly according to claim 2 or any of claims 3-8 when dependent upon claim 2, wherein the centre of gravity of the fuel cell module is vertically underneath the at least one suspension device.

11. A fuel cell module support or assembly according to any of the preceding claims, mounted on a wall.

12. A method of assembling a fuel cell system, comprising the steps of:
(i) providing a frame having at least one bracket attached thereto;
(ii) providing a fuel cell module and an at least one suspension device; and
(iii) suspending said at least one suspension device such that it depends from said at least one bracket and said fuel cell module from said at least one suspension device.

## Patentansprüche

1. Brennstoffzellenmodulstützkonstruktion, die aufweist: ein Gestell; mindestens eine Halterung, die am Gestell befestigt ist; und mindestens eine Aufhängevorrichtung, die von der mindestens einen Halterung herabhängt, so ausgebildet, dass ein Brennstoffzellenmodul bei Benutzung von der mindestens einen Aufhängevorrichtung herabhängen kann, die von der mindestens einen Halterung herabhängt.

2. Brennstoffzellenmodulstützkonstruktion und Biennstoffzellenmodulbaugruppe, die eine Brennstoffzellenmodulstützkonstruktion nach Anspruch 1 und einen Brennstoffzellenmodul aufweist, der von der mindestens einen Aufhängevorrichtung herabhängt.

3. Brennstoffzellenmodulstützkonstruktion oder -baugruppe nach einem der vorhergehenden Anspruche, wobei der Brennstoffzellenmodul mindestens eine Brennstoffzellenstapelanordnung aufweist.

4. Brennstoffzellenmodulstützkonstruktion oder-baugruppe nach Anspruch 3, wobei der Brennstoffzellenmodul zusätzlich mindestens eines der folgenden aufweist: einen Abgasbrenner; einen Luftvorerhitzer; und eine Brennstoffprozessoreinheit.

5. Brennstoffzelleronodulstützkonstruktion oder -baugruppe nach einem der vorhergehenden Ansprüche, wobei die mindestens eine Halterung so ausgebildet ist, dass sie gestattet, dass die mindestens eine Aufhängevorrichtung auf der mindestens einen Halterung in Position geschoben wird.

6. Brennstoffzellenmodulstützkonstruktion oder -baugruppe nach einem der vorhergehenden Ansprüche, wobei die mindestens eine Halterung so ausgebildet ist, dass sie gestattet, dass die mindestens eine Aufhängevorrichtung darauf positioniert wird.

7. Brennstoffzellenmodulstützkonstruktion oder -baugruppe nach Anspruch 5 oder 6, wobei die mindestens eine Halterung mindestens einen Arm aufweist, längs dessen die mindestens eine Authängevorrichtung bei Benutzung verschoben werden kann.

8. Brennstoffzellenmodulstützkonstruktion oder -baugruppe nach einem der Ansprüche 5 bis 7, wobei die mindestens eine Halterung ein zwangläufiges Lokalisierungsmerkmal aufweist, das so ausgebildet ist, dass es bei Benutzung zu der mindestens einen Aufhängevorrichtung passt oder damit in Eingriff kommt.

9. Brennstoftzellenmodulbaugruppe nach Anspruch 2 oder einem der Ansprüche 3 bis 8, wenn er vom Anspruch 2 abhängig ist, wobei der Schwerpunkt des Brennstoffzellenmodus nicht vertikal unterhalb der mindestens einen Aufhängevorrichtung ist.

10. Brennstoffzellenmodulbaugruppe nach Anspruch 2 oder einem der Ansprüche 3 bis 8, wenn er vom Anspruch 2 abhängig ist, wobei der Schwerpunkt des Brennstoffzellenmoduls vertikal unterhalb der mindestens einen Aufhängevorrichtung ist.

11. Brennstoffzellenmodulstützkonstruktion oder -baugruppe nach einem der vorhergehenden Ansprüche, an einer Wand montiert.

12. Verfahren zum Montieren eines Brennstoffzellensystems, das die folgenden Schritte aufweist:
(i) Bereitstellen eines Gestells mit mindestens einer daran befestigten Halterung;
(ii) Bereitstellen eines Brennstoffzellenmoduls und mindestens einer Aufhängevorrichtung; und
(iii) Aufhängen der mindestens einen Aufhängevorrichtung so, dass sie von der mindestens einen Halterung und der Brennstoffzellenmodul von der mindestens einen Aufhängevorrichtung herabhängt.

## Revendications

1. Support de module de pile à combustible, comprenant un cadre, au moins une console fixée sur ledit cadre, et au moins un dispositif de suspension s'étendant à partir de ladite au moins une console, configuré de sorte qu'en service, un module de pile à combustible peut s'étendre à partir dudit au moins un dispositif de suspension s'étendant à partir de ladite au moins une console.

2. Support et assemblage de module de pile à combustible de modules de pile à combustible, comprenant un support de module de pile à combustible selon la revendication 1, et un module de pile à combustible s'étendant à partir dudit au moins un dispositif de suspension.

3. Support ou assemblage de module de pile à combustible selon l'une quelconque des revendications précédentes, ledit module de pile à combustible comprenant au moins un assemblage d'empilement de piles à Combustible.

4. Support ou assemblage de module de pile à combustible selon la revendication 3, ledit module de pile à combustible comprenant en outre au moins un des dispositifs ci-dessous : un brûleur de gaz résiduaire, un réchauffeur d'air ou une unité de traitement du combustible.

5. Support ou assemblage de module de pile à combustible selon l'une quelconque des revendications précédentes, ladite au moins une console étant adaptée pour permettre le glissement dudit au moins un dispositif de suspension dans sa position sur ladite au moins une console.

6. Support ou assemblage de module de pile à combustible selon l'une quelconque des revendications précédentes, ladite an moins une console étant adaptée pour permettre le positionnement dudit au moins un dispositif de Suspension au-dessus de celle-ci.

7. Support ou assemblage de module de pile à combustible selon les revendications 5 ou 6, ladite au moins une console comprenant au moins un bras, le long duquel ledit au moins un dispositif de suspension peut être glissé en service.

8. Support ou assemblage de module de pile à combustible selon l'une quelconque des revendications 5 à 7, ladite au moins une console comprenant une structure de positionnement positive adaptée pour être accouplée en service audit au moins un dispositif de suspension ou à s'engager dans celui-ci.

9. Assemblage de modules de pile à combustible selon la revendication 2 ou selon l'une quelconque des revendications 3 à 8, dépendant de la revendication 2, dans lequel le centre de gravité du module de pile à combustible ne se situe pas verticalement au-dessous du au moins dispositif de suspension.

10. Assemblage de modules de pile à combustible selon la revendication 2 ou selon l'une quelconque des revendications 3 à 8, dépendant de la revendication 2, dans lequel le centre de gravité du module de pile à combustible se situe verticalement au-dessous du au moins un dispositif de suspension.

11. Support de module de pile à combustible ou assemblage selon l'une quelconque des revendications précédentes, monté sur un mur.

12. Procédé d'assemblage d'un système de piles à combustible, comprenant les étapes ci-dessous :
(i) fourniture d'un cadre comportant au moins une console qui y est fixée ;
(ii) fourniture d'un module de pile à combustible et d'au moins un dispositif de suspension ; et
(iii) suspension dudit au moins un dispositif de suspension, de sorte qu'il s'étend à partir de ladite au moins une console, ledit module de pile à combustible s'étendant à partir dudit au moins un dispositif de suspension.
